(19) Europäisches Patentamt
European Patent Office
Office européen des brevets

(11) **EP 2 570 225 A1**

(12) **EUROPEAN PATENT APPLICATION**
published in accordance with Art. 153(4) EPC

(43) Date of publication:
**20.03.2013 Bulletin 2013/12**

(51) Int Cl.:
**B23K 26/38** (2006.01)   **B23K 26/00** (2006.01)
**B23K 26/06** (2006.01)   **B23K 26/40** (2006.01)
**B23K 26/42** (2006.01)   **B28D 5/00** (2006.01)
**C03B 33/09** (2006.01)

(21) Application number: **11780720.6**

(22) Date of filing: **13.05.2011**

(86) International application number:
**PCT/JP2011/061075**

(87) International publication number:
**WO 2011/142464 (17.11.2011 Gazette 2011/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2010   JP 2010112553**

(71) Applicant: **Asahi Glass Company, Limited
Tokyo 100-8405 (JP)**

(72) Inventor: **SAITO, Isao
Tokyo 100-8405 (JP)**

(74) Representative: **Müller-Boré & Partner
Patentanwälte
Grafinger Straße 2
81671 München (DE)**

(54) **CUTTING METHOD AND CUTTING DEVICE**

(57)    Provide a cutting process and a cutting system, which are capable of not only improving heating efficiency and cutting accuracy but also easily coping with a change in the design of a planned cutting line.

In a process for cutting a work piece 10 by irradiating a front surface 11 of the work piece 10 with first heating light 43 and second heating light 44 and moving the irradiation regions 100 and 200 of each light along a planned cutting line 12 on the front surface 11, the first heating light 43 has a width W1 extending in a direction orthogonal to the moving direction thereof on a certain area of the front surface 11, the width of the first heating light being set so as to be smaller than a width W2 of the second heating light 44 extending in a direction orthogonal to the moving direction of the second heating light, and the irradiation region 100 of the first heating light 43 being moved in tandem with the irradiation region 200 of the second heating light 44, which precedes the first irradiation region.

Fig. 3

**Description**

TECHNICAL FIELD

The present invention relates to a cutting process and a cutting system.

BACKGROUND ART

As a representative process for cutting a work piece (brittle-material plate, such as a glass plate) has been known a process for cutting a work piece along a scribe line by forming the scribe line on a front surface of the work piece, followed by applying bending stress to the work piece. This process has a problem in that chips are created when forming the scribe line.

In order to solve this problem, consideration has been made about a process for cutting a work piece by irradiating a front surface of the work piece with infrared light without forming a scribe line, and moving an irradiation position of the infrared light along a planned cutting line on the front surface of the work piece.

In this process, laser light is partly absorbed as heat into a portion of a work piece in an irradiation position of the laser light to place the irradiation position at a higher temperature than the surroundings of the irradiation position, whereby the irradiation position is subjected to compression stress by thermal expansion. As the counteraction of the generation of the compression stress, a portion of the work piece behind the irradiation position of the laser light is subjected to tensile stress in a direction orthogonal to a planned cutting line, whereby the work piece is cut. Thus, the cutting speed of the work piece is determined based on the moving speed of the irradiation position of the laser light.

However, when the moving speed is too high, it is impossible to provide the work piece with an amount of heat required for cutting. Thus, limitation is imposed on the cutting speed.

From this point of view, there has been recently proposed a process for preliminarily heating a portion of a work piece close to a planned cutting line by a heater in order to increase the cutting speed as in, e.g. JP-A-2009-84133.

DISCLOSURE OF INVENTION

TECHNICAL PROBLEM

The amount of heat required for cutting is determined based on the physical property of a work piece (such as a coefficient of thermal expansion, Young's modulus and fracture toughness), size or configuration (such as thickness), or another factor. When the amount of heat required for cutting is obtained by laser light, it is necessary to increase the power density of the laser light as the width of the laser light decreases.

However, when the power density of laser light is too high, it is impossible to cut a work piece since a portion of the work piece that has been overheated and softened is subjected to viscous flow so as to relieve thermal stress in the irradiation position of the laser light. In particular, a glass plate is likely to have a problem because of having a lower softening temperature than other work pieces (such as a silicon substrate of a ceramic plate).

From this point of view, the width of laser light has been set so as to be wider to some extent in order to provide a work piece with an amount of heat required for cutting. Heating a wide region in such a way deteriorates heating efficiency or cutting accuracy. In particular, in, e.g. a case where a portion of a work piece close to an edge thereof is cut, the cutting is likely to be curved toward the edge and deteriorate cutting accuracy since the work piece has different rigidities on both sides of a planned cutting line, in other words, a portion of the work piece close to the edge with respect to the planned cutting line has a lower rigidity than the opposite portion of the work piece.

Further, in the process disclosed in JP-A-2009-84133, it is necessary to provide a heater in conformity to the sizes and the form of a planned cutting line on a work piece since a portion of the work piece close to the planned cutting line is preliminarily heated by the heater in order to have an increased cutting speed. Accordingly, it is difficult to cope with a change in the design of the planned cutting line. Furthermore, the process disclosed in JP-A-2009-84133 is inferior in heating efficiency since a portion of a work piece to be preliminarily heated is not moved.

The present invention is proposed in consideration of the above-mentioned problems. It is an object of the present invention to provide a cutting process and a cutting system, which are capable of not only increasing heating efficiency and cutting accuracy but also easily coping with a change in the design of a planned cutting line.

SOLUTION TO PROBLEM

In order to attain the object, the cutting process according to the present invention is characterized to be a process for cutting a work piece by irradiating first and second irradiation regions on a front surface of the work piece with first heating light and second heating light and relatively moving the first and second irradiation regions along a planned cutting line on the front surface;
wherein a width of the first irradiation region extending in a direction orthogonal to the moving direction thereof is smaller than a width of the second irradiation region extending in a direction orthogonal to the moving direction thereof, and the first irradiation region is moved in tandem with the second irradiation region preceding the first irradiation region.

Further, in order to attain the object, the cutting system according to the present invention is characterized to include a stage for supporting a work piece; light sources for first heating light and second heating light, with which a front surface of the work piece is irradiated; and a controller, the controller controlling respective first and second irradiation positions of the first and second heating light on the front surface, and the controller moving the first and second irradiation regions along a planned cutting line on the front surface relatively with respect to the work piece such that the work piece is cut;
wherein the cutting system further includes an irradiation device and a controller for the first and second irradiation regions, the irradiation device irradiating the first heating light and the second heating light such that a width of the first irradiation region extending in a direction orthogonal to the moving direction thereof is smaller than a width of the second irradiation region extending in a direction orthogonal to the moving direction of the second irradiation region, and the controller for the first and second irradiation regions moving the first irradiation region in tandem with the second irradiation region preceding the first irradiation region.

ADVANTAGEOUS EFFECT OF INVENTION

In accordance with the present invention, it is possible to provide a cutting process and a cutting system, which are capable of not only increasing heating efficiency and cutting accuracy but also easily coping with a change in the design of a planned cutting line.

BRIEF DESCRIPTION OF DRAWINGS

Fig. 1 is a side view of the cutting system according to a first embodiment of the present invention;
Fig. 2 is a side view of essential portions of the cutting system shown in Fig. 1;
Fig. 3 is an explanatory view showing how to cut by use of the cutting system shown in Fig. 1;
Fig. 4 is an explanatory view showing how to cut according to a second embodiment of the present invention;
Fig. 5 is an explanatory view showing how to cut according to a third embodiment of the present invention; and
Fig. 6 is a side view of essential portions of the cutting system according to a fourth embodiment of the present invention.

DESCRIPTION OF EMBODIMENTS

Now, embodiments of the present invention will be described in reference to the accompanying drawings. It should be noted that the present invention is by no means limited to the embodiments described later, and that various modifications and substitutions may be made to the embodiments described later without departing from the scope of the present invention.
For example, although a glass plate is used as the work piece in an embodiment described later, a silicon substrate or a ceramic plate may be used instead of the glass plate.

(First Embodiment)

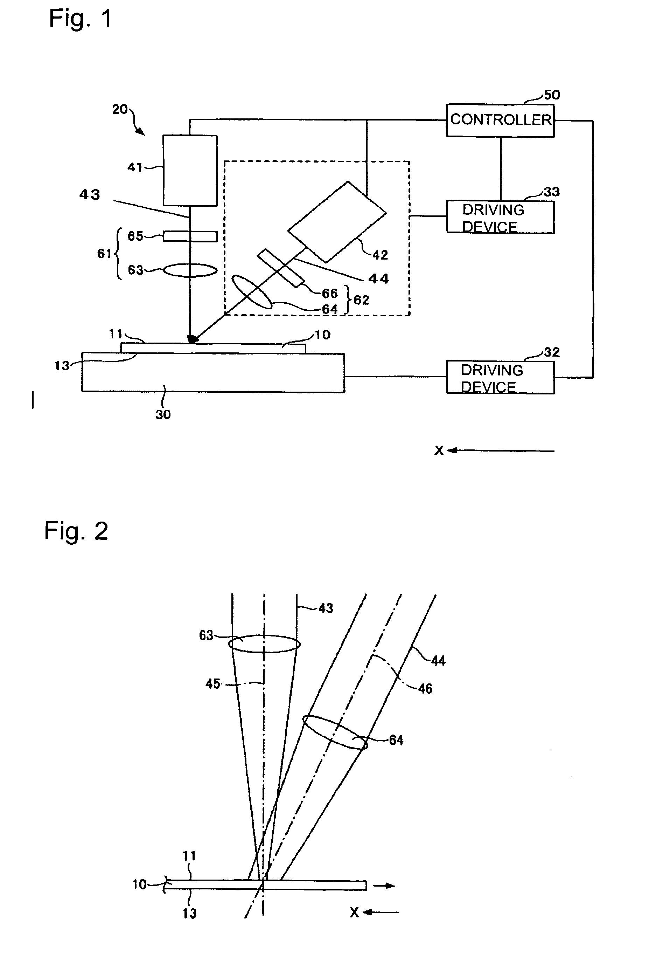

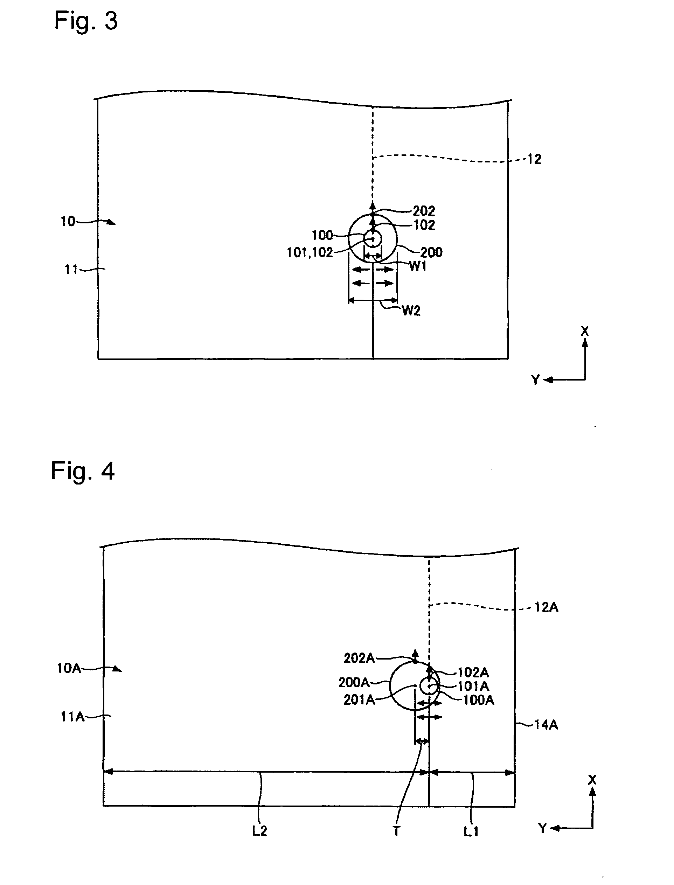

Fig. 1 is a side view of the cutting system according to a first embodiment of the present invention. Fig. 2 is a side view of essential portions of the cutting system shown in Fig. 1. Fig. 3 is an explanatory view showing how to cut by use of the cutting system shown in Fig. 1.
The cutting system 20 includes a stage 30 for supporting a glass plate 10, a first light source 41 and a second light source 42 for irradiating a front surface 11 of the glass plate 10 with first heating light 43 and second heating light 44, respectively, and a controller 50 for controlling first and second irradiation regions 100 and 200 (see Fig. 3) on the front surface 11 of the glass plate 10, which are irradiated with the first heating light 43 and the second heating light 44, respectively, as shown in Figs. 1 and 2.
In this cutting system 20, the controller 50 moves the first and second irradiation regions 100 and 200 along a planned cutting line 12 on the front surface 11 to cut the glass plate 10 as shown in Fig. 3. It should be noted that the front surface 11 of the glass plate 10 has no scribe line preliminarily formed thereon.
The stage 30 supports a rear surface 13 of the glass plate 10. The stage 30 may support the entire rear surface 13 of the glass plate 10 or partly support the rear surface 13. The glass plate 10 may be fixed to the stage 30 by suction or be fixed to the stage 30 by use of an adhesive.

The stage 30 is, e.g. an X-Y stage and is connected to a driving device 32. The driving device 32 may have a normal structure and may be constituted by, e.g. an actuator or the like. The driving device 32 moves the stage 30 in an in-plane direction with respect to the first light source 41 and the second light source 42 or the like under control by the controller 50 to move the first and second irradiation regions 100 and 200 of the first heating light 43 and the second heating light 44 on the front surface 11 of the glass plate 10.

The first light source 41 is a light source for emitting the first heating light 43 under control by the controller 50. The heating light referred to with respect to the present invention means light, with which a glass plate is irradiated to produce heat generation therein. Examples of the heating light include ultraviolet light, visible light and infrared light. The heating light has a wavelength of preferably at least 250 nm since, when the wavelength is too short, the photon energy increases to chemically break (photolyze) the combination of molecules constituting the glass to decrease the rate at which the energy is transforming into heat. When the wavelength is long, in principle, no limitation is imposed on the wavelength, although the wavelength is preferably at most 11,000 nm in terms of feasibility.

No special limitation is imposed on the first light source 41, which may a laser oscillator for emitting heating light, an infrared heater (IR heater) or the like. When an infrared heater is used, it may be used, being combined with a reflector to narrow down the irradiation position of the heating light.

The laser oscillator may be, for example, a UV laser (wavelength: 355 nm), a green laser (wavelength: 532 nm), a semiconductor laser (DDL) (wavelength: 808 nm, 940 nm, 975 nm), a fiber laser (FBL) (wavelength: 1,060 to 1,100 nm), a Nd:YAG laser (wavelength: 1,064 nm), a Ho:YAG laser (wavelength: 2,080 nm), an Er:YAG laser (wavelength: 2,940 nm) and a $CO_2$ laser (wavelength: 10,600 nm).

Between the first light source 41 and the stage 30 is disposed a first optical system 61. The first optical system 61 is an optical system which irradiates the front surface 11 of the glass plate 10 with the first heating light 43 emitted from the first light source 41. The first optical system 61 includes a first condenser lens 63 which condenses the first heating light 43. The first optical system may include a first homogenizer 65 which homogenizes the light intensity distribution of the first heating light 43. In this case, the first homogenizer 65 is disposed between the first light source 41 and the first condenser lens 63.

The first heating light 43 enters the front surface 11 of the glass plate 10 through the first optical system 61 after having been emitted from the first light source 41. After the first heating light 43 has entered the glass plate 10, the first heating light is partly absorbed as heat into the glass plate 10, and the remaining part of the first heating light passes through the glass plate 10.

When heating light has an incident intensity of $I_0$ (unit: W) on a front surface of a glass plate and an incident distance of Z (unit: cm) from the front surface of the glass plate, the intensity I of the heating light on the position at the incident distance Z is, in general, represented by the following formula:

$$I=I_0 \times exp(-\alpha \times Z)$$

wherein $\alpha$ is a constant called absorption coefficient (unit: /cm), which depends on the wavelength of the heating light or the composition of the glass plate.

The absorption coefficient $\alpha 1$ of the glass plate 10 to the first heating light 43 may be properly determined, depending on the thickness or the like of the glass plate 10. When the work piece is a window glass for a vehicle, the absorption coefficient is preferably, e.g. at most 50/cm. The absorption coefficient is preferably at least 0.2/cm. When the work piece has a small thickness as in, e.g. a glass substrate for an LCD, even a $CO_2$ laser, which can cause the work piece to have an absorption coefficient of at least 100/cm, may be applicable.

When the absorption coefficient $\alpha 1$ is too small, a large part of the first heating light 43, which has entered into the glass plate 10, passes through the glass plate 10. As a result, it is difficult to cut the glass plate 10 since the amount of heat given to the glass plate 10 by the first heating light 43 is too small.

On the other hand, when the absorption coefficient $\alpha 1$ is too large, a large part of the first heating light 43, which has entered into the glass plate 10, is absorbed as heat in a portion of the glass plate 10 in the vicinity of the front surface 11. As a result, the inside of the glass plate 10 does not acquire a sufficiently high temperature therein since the glass generally has a low thermal conductivity. Accordingly, the glass plate 10 fails to have sufficient tensile stress produced therein, and the quality of the cut surfaces deteriorate.

The first heating light 43 has an optical axis 45 extending so as to vertically cross the front surface 11 of the glass plate 10 as shown in, e.g. Fig. 2. Thus, it is easy to control a thermal stress distribution since the center of gravity (center) of a first irradiation position of the first heating light 43 on the front surface 11 of the glass plate 10 is in alignment with the center of gravity (center) of a first irradiation position of the first heating light on the rear surface 13 of the glass plate as viewed from a thickness direction of the glass plate 10. The first irradiation position of the first heating light 43 on the front surface 11 of the glass plate 10 may be formed in a circular shape, an elliptical shape or a rectangular shape. No limitation is imposed on the shape of the first irradiation position. In particular, the first irradiation position is formed in a shape having a roundness of preferably at most 0.5R when the first irradiation position has an outer circumference having a radius of R. When the first irradiation position has a roundness of at most 0.5R, the change in the width of the first irradiation position in a normal direction of a planned cutting line is small when performing cutting operation in a curved shape. As a result, since the cutting accuracy of such cutting operation in a curved shape is increased, it is possible to perform cutting operation with high accuracy even when the planned cutting line has a small radius of curvature. The first irradiation position has a roundness of more preferably at most 0.3R. The first irradiation position has a roundness of further preferably at most 0.2R.

The second light source 42 is a light source which emits the second heating light 44 under control by the controller 50. No special limitation is imposed on the second light source 42, which may a laser oscillator for emitting heating light, an infrared heater (IR heater) or the like as in the first light source 41.

Between the second light source 42 and the stage 30 is disposed a second optical system 62. The second optical system 62 is an optical system which irradiates the front surface 11 of the glass plate 10 with the second heating light 44 emitted from the second light source 42. The second optical system 62 includes a second condenser lens 64 which condenses the second heating light 44 as in the first optical system 61. The second optical system may include a second homogenizer 66 which homogenizes the light intensity distribution of the second heating light 44. In this case, the second homogenizer 66 is disposed between the second light source 42 and the second condenser lens 64.

The second heating light 44 enters the front surface 11 of the glass plate 10 through the second optical system 62 after having been emitted from the second light source 42. After the second heating light 44 has entered the glass plate 10, the second heating light is partly absorbed as heat into the glass plate 10, and the remaining part of the second heating light passes through the glass plate 10.

The absorption coefficient of $\alpha2$ of the glass plate 10 to the second heating light 44 may be properly determined, depending on the thickness or the like of the glass plate 10. When the work piece is a window glass for a vehicle, the absorption coefficient is preferably, e.g. at most 50/cm as in the absorption coefficient $\alpha1$. The absorption coefficient is preferably at least 0.2/cm. When the work piece has a small thickness as in, e.g. a glass substrate for an LCD, even a $CO_2$ laser, which provides a work piece with an absorption coefficient of at least 100/cm, may be applicable.

The second heating light 44 has an optical axis 46 so as to obliquely cross the front surface 11 of the glass plate 10 as shown in, e.g. Fig. 2 and is positioned in a certain plane vertical to the front surface 11 of the glass plate 10. When the second heating light 44 is moved in an in-plane direction of the certain surface, it is easy to control a thermal stress distribution since the center of gravity of the second heating light 44 on the front surface 11 of the glass plate 10 is in alignment with the center of gravity (center) of the second heating light on the rear surface 13 of the glass plate as viewed from the thickness direction of the glass plate 10. The second heating light 44 may be formed in a circular shape, an elliptical shape or a rectangular shape on the front surface 11 of the glass plate 10. No limitation is imposed to the shape of the second heating light.

The second irradiation region 200 of the second heating light 44 is relatively movable with respect to the first irradiation region 100 of the first heating light 43 on the front surface 11 of the glass plate 10. Specifically, the second light source 42 and the second optical system 62 are configured to be controllably moved by a driving device 33 for example. The driving device 33 may have a normal structure and may be constituted by, e.g. an actuator or the like. The driving device 33 moves the second light source 42 and the second optical system 62 with respect to the stage 30 under control by the controller 50 to relatively move the second irradiation region 200 with respect to the first irradiation region 100.

It should be noted that the second light source 42 and the second optical system 62 may be manually moved instead of the use of the driving device 33.

The controller 50 may be constituted by a microcomputer or the like. The controller 50 controls the first light source 41, the second light source 42, the driving devices 32 and 33 or the like to control the positions of the first and second irradiation regions 100 and 200 on the front surface 11 of the glass plate 10. The controller 50 controls various movements of the cutting system 20, which will be described as follows.

Now, the cutting process by use of the cutting system 20 having the above-mentioned structure will be described based on Fig.3.

No limitation is imposed on the glass plate 10 and may be, for example, a window glass for a building, a window glass for a vehicle or a glass substrate for a liquid crystal display (LCD).

The material used in a window glass for a building or a window glass for a vehicle is soda lime glass which contains 65 to 75% of $SiO_2$, 0 to 3% of $Al_2O_3$, 5 to 15% of CaO, 0 to 15% of MgO, 10 to 20% of $Na_2O$, 0 to 3% of $K_2O$, 0 to 5% of $Li_2O$, 0 to 3% of $Fe_2O_3$, 0 to 5% of $TiO_2$, 0 to 3% of $CeO_2$, 0 to 5% of BaO, 0 to 5% of SrO, 0 to 5% of $B_2O_3$, 0 to 5% of ZnO, 0 to 5% of $ZrO_2$, 0 to 3% of $SnO_2$ and 0 to 0.5% of $SO_3$ as represented by mass percentage based on oxides.

In a window glass for a building, the content of $Fe_2O_3$ is about 0.1 %. On the other hand, in a window glass for a vehicle (such as a heat absorbing and/or ultraviolet ray absorbing glass plate), the content of $Fe_2O_3$ is about 0.5%. As just described, a window glass for a vehicle tends to have a higher absorption coefficient $\alpha$ than a window glass for a building because of having a higher content of $Fe_2O_3$.

The glass used for a glass substrate for an LCD is alkali-free glass which contains 39 to 70% of $SiO_2$, 3 to 25% of $Al_2O_3$, 1 to 20% of $B_2O_3$, 0 to 10% of MgO, 0 to 17% of CaO, 0 to 20% of SrO and 0 to 30% of BaO as represented by mass percentage based on oxides. Such a glass substrate for an LCD tends to a lower absorption coefficient $\alpha$ than a window glass for a building or a window glass for a vehicle.

Representative absorption coefficients $\alpha$ of each glass are shown in Table 1.

[Table 1]

|  | Absorption coefficient of window glass for building (/cm) | Absorption coefficient of window glass for vehicle (/cm) | Absorption coefficient of glass substrate for LCD (/cm) |
|---|---|---|---|
| Laser light having wavelength 808 nm | 0.5 | 1.9 | 0.1 |
| Laser light having wavelength 1,070 nm | 0.7 | 2.7 | 0.2 |
| Laser light having wavelength 10,600 nm | At least 100 | At least 100 | At least 100 |

When the glass plate 10 is cut, the stage 30, on which the glass plate 10 is set, is first moved for positioning. Next, the front surface 11 of the glass plate 10 is irradiated with the first heating light 43 and the second heating light 44 at the starting point of the planned cutting line 12 at substantially the same time. The starting point of the planned cutting line 12 may have a cut preliminarily formed thereon as the basic point for cutting. Then, the first and second irradiation regions 100 and 200 are moved along the planned cutting line 12 to cut the glass plate 10.

In this embodiment, the width W1 of the first irradiation region 100 (see Fig. 3), which extends in a direction orthogonal to the moving direction of the first irradiation region 100, is set to be smaller on the front surface 11 of the glass plate 10 than the width W2 of the second irradiation region 200 (see Fig. 3), which extends in a direction orthogonal to the moving direction of the second irradiation region 200. The first irradiation region 100 is moved in tandem with the second irradiation region 200 preceding the first irradiation region.

The wording "preceding" means that the front end 202 (202A in a second embodiment or 202B in a third embodiment) of the second irradiation region 200 is positioned ahead of the front end 102 (102 A in the second embodiment or 102B in the third embodiment) of the first irradiation region 100 in the moving direction. This tandem operation does not need to be performed along the entire planned cutting line 12. For example, the first irradiation region 100 needs not to be in tandem with the second irradiation region 200 in the vicinity of the starting point and the ending point of the planned cutting line 12. No limitation is imposed on the positional relationship between the first and second irradiation regions 100 and 200 as long as the first irradiation region 100 having a smaller width passes in the region preheated by the second irradiation region 200 having a larger width. For example, the first and second irradiation regions 100 and 200 may partly overlap each other or be partly away from each other. The positional relationship between the first and second irradiation regions 100 and 200 may be variable or invariable at the time of cutting.

For example, the first and second irradiation regions 100 and 200 are moved so as to have their centers (i.e. their centers of gravity) 101 and 201 positioned so as to be concentric with each other as shown in Fig. 3. During the movement, the centers 101 and 201 move on the planned cutting line 12.

When the first irradiation region 100 having a smaller width is moved in tandem with the preceding second irradiation region 200 having a larger width in this way, the glass plate is subjected to compression stress since a portion of the glass substrate in the first irradiation region 100 having a smaller width is placed at a higher temperature than the surroundings of that portion. As the counteraction, a portion of the glass substrate behind the first irradiation region 100 having a smaller width is subjected to tensile stress in a direction orthogonal to the planned cutting line 12, whereby the glass plate 10 is cut.

Since the first irradiation region 100 having a smaller width serves as an actual cutting position in this way, it is possible to increase cutting accuracy. This advantage is particularly prominent in a case where the glass plate has different rigidities on both sides of the planned cutting line 12, as in a case the glass plate 10 is cut in a portion thereof in the vicinity of an edge. Thermal stress caused by irradiation of the heating light becomes dominant rather than the difference in rigidity on the right and left sides of the planned cutting line 12, whereby it is possible to obtain high cutting accuracy.

Further, since an abrupt temperature gradient is created in the vicinity of the first irradiation region 100, it is possible to perform the cutting operation with a small amount of heat. Thus, it is possible to reduce the outputs of the first and second light sources 41 and 42 in comparison with a case where the cutting operation is performed at the same cutting speed by use of the conventional cutting systems. It is possible to increase the cutting speed in comparison with a case where the outputs of the first and second light sources 41 and 42 are set at the same levels as the conventional cutting systems.

Furthermore, it is easy to cope with a change in the design of the planned cutting line 12 since the glass plate 10 is cut by moving the first and second irradiation regions 100 and 200 along the planned cutting line 12.

Now, preferred conditions for the first heating light 43 and the second heating light 44 will be described.

Q1/Q2 as the ratio of the amount of heat between the amount of heat Q1 per unit time given to the glass plate 10 by the first heating light 43 (hereinbelow, referred to as "the first amount of heat Q1") (unit: W) and the amount of heat Q2 per unit time given to the glass plate 10 by the second heating light 44 (hereinbelow, referred to as "the second amount of heat Q2") (unit: W) is preferably at least 0.6. When Q1/Q2 as the ratio of the amount of heat is at least 0.6, it is possible to improve cutting accuracy since the effect by the first heating light 43 becomes dominant.

The first and second amounts of heat Q1 and Q2 may be set, depending on the moving speed of the first and second irradiation regions 100 and 200 or the like and be set such that the glass is prevented from being overheated and softened in the first and second irradiation regions 100 and 200. Specifically, the first and second amounts of heat are set such that the temperatures of the glass in the first and second irradiation regions 100 and 200 are lower than the annealing point of the glass.

The annealing point of the glass is the temperature that the glass has a viscosity of $10^{12}$ Pa·s. The annealing point is determined by the composition of glass or the like. For example, soda lime glass used for a window glass has an annealing point of about 550°C. The annealing point is also called a 15 minutes of relaxation time, which means that 95% distortion is supposed to be relaxed in 15 minutes.

In this embodiment, it is possible to prevent a viscous flow relieving thermal stress because the portions of the glass in the first and second irradiation regions 100 and 200 are set to be placed at a lower temperature than the annealing point and to cut the glass plate 10.

The width W1 of the first irradiation region 100 may be determined, depending on the physical properties, the size or configuration of the glass plate 10 and the size or the form of the planned cutting line 12, and the width is preferably at least 0.4 mm in, e.g. a case where the glass plate is a window glass for a vehicle. The width W1 is too small, it is difficult to give a sufficient amount of heat such that the cutting operation can be performed with the temperature of a portion of the glass in the first irradiation region 100 being kept at a lower temperature than the annealing point. On the other hand, the width W1 is too large, it is difficult to perform the cutting operation with good accuracy since the region that can be a cutting position is widen. From this point of view, the width W1 is preferably at most the thickness of the glass plate 10. When the glass plate is a window glass for a vehicle, the width is generally at most 5 mm.

W1/W2 as the width ratio between the width W1 of the first heating light 43 (hereinbelow, referred to as "the first irradiation width W1") and the width W2 of the second heating light 44 (hereinbelow, referred to as "the second irradiation width W2") is preferably at most 0.2. When W1/W2 as the width ratio is at most 0.2, it is possible to improve cutting accuracy since the effect by the first heating light 43 becomes dominant. The first irradiation width W1 and the second irradiation width W2 are the widths of the first and second irradiation regions 100 and 200, which pass through the centers of gravity of the first and second irradiation regions and extend in a normal direction of the paned cutting line.

When cutting the glass plate 10, it is necessary to locally increase the temperatures of both of the front and rear surfaces of the glass plate 10 to at least a certain value. From this point of view, it is possible to increase heating efficiency by irradiating the glass plate 10 with the first heating light 43 such that there is no temperature difference between the front and rear surfaces of the glass plate 10.

It is preferred that the first heating light 43 be condensed such that D1/D2 as the ratio of the power density between the power density D1 on the front surface 11 of the glass plate 10 (unit: $W/mm^2$) and the power density D2 on the rear surface 13 of the glass plate 10 (unit: $W/mm^2$) is from 0.8 to 1.2. When D1/D2 as the ratio of the power density is within this range, it is possible to minimize the temperature difference on the front and rear surfaces of the glass plate 10.

Although the stage 30 is moved in order to move the first and second irradiation regions 100 and 200 on the front surface 11 of the glass plate 10 in this embodiment, the present invention is not limited to such a mode. For example, the first and second light sources 41 and 42 may be moved, or the first and second light sources as well as the stage may be moved.

Although the first heating light 43 and the second heating light 44 are utilized to cut the glass plate 10 in this embodiment, third heating light may be utilized. No limitation is imposed to the number of the heating light.

Although the glass plate is irradiated with the first heating light 43 and the second heating light 44 from the same front surface side to be cut in this embodiment, the glass plate may be irradiated with either one of the first heating light and the second heating light from the rear surface side.

Although the first and second light sources 41 and 42 are used as the light sources for the first heating light 43 and the second heating light 44 in this embodiment, a single light source may be used. In this case, the heating light emitted from such a single light source may be split such that the glass plate 10 is irradiated with split parts of the heating light, respectively.

(Second embodiment)

Fig. 4 is an explanatory view showing how to cut according to the second embodiment of the present invention.
In this embodiment, a glass plate 10A has an asymmetrical shape with respect to a linear planned cutting line 12A. The glass plate has different widths L1 and L2 (L2>L1) on both sides of the planned cutting line 12A. Particularly in a case where the width L1 is quite narrow, the glass plate has different rigidities on both sides of the planned cutting line 12A.
In this case, a second irradiation range 200A having a greater width is preferred to be displaced toward one side of the planned cutting line12A in a certain region of a front surface 11A of the glass plate 10A. For example, the second irradiation region 200A having a greater width has the center (center of gravity) 201A displaced toward one side of the planned cutting line 12A.
The displacement position of the center of gravity is determined based on the positional relationship between an edge 14A of the glass plate 10A and the planned cutting line 12A, such as the widths L1 and L2. The center of gravity is displaced toward a portion of the glass plate 10A on one side of the planned cutting line 12A, which has a greater rigidity, such as a portion of the planned glass plate on one side of the planned cutting line 12A, which has a greater width. More specifically, when the formula of L2>L1 is established as shown, the center of gravity is set so as to be displaced toward a portion of the glass plate having a greater width L2 with respect to the planned cutting line 12A by a preset amount.
When the formula of the width L1 <the width L2 is established, the preset displacement amount T may be set based on the width L1 and be set so as to have a greater value as the width L1 becomes smaller. For example, the preset displacement amount may be determined based on the distance between the planned cutting line 12A and the edge 14A of the glass plate 10A in a normal direction of the planned cutting line 12A, i.e. the widths L1 and L2 of the glass plate 12A on both sides of the planned cutting line 12A in accordance with the following formulae:

$$(W2/5) \times K \leq T \leq W2$$

$$K = (L2-L1)/(L1+L2)$$

When the width L2 is sufficiently great, the preset displacement amount may be set based only on the width L1. When the widths are such that the coefficient K is at most a threshold value, T may be set to 0 since the edge 14A of the glass plate 10A has a small effect. The threshold value may be set based on, e.g. the thermal conductivity of the glass plate 10A. For example, in a case where the glass plate is a window glass for a vehicle, the center (center of gravity) 201 A of the second irradiation region 200A having a greater width is preferred to be displaced toward a one side with respect to the planned cutting line 12A (i.e. a side having the width L2) when the threshold value K is at least 0.1, in particular at least 0.2. Although explanation of the shown case has been made about a case where the glass plate has widths L1 and L2 extending in a right hand direction and a left hand direction, respectively, in the figure, the glass plate may have widths L1 and L2 extending in a left hand direction and a right hand direction, respectively, or may have widths L1 and L2 extending in one of upward and downward directions and the other direction, respectively. No limitation is imposed on the directions of the widths.
For example, a first irradiation region 100A and the second irradiation region 200A are moved with the centers 101A and 201A being out of alignment with each other as shown in Fig. 4. During the movement, the center 101A moves on the planned cutting line 12A. On the other hand, the center 201A moves, being displaced in a direction orthogonal to the planned cutting line 12A with respect to the center 101A.
In a case where the glass plate has different rigidities on both sides of the planned cutting line 12A, when the second irradiation region 200A having a greater width moves, being displaced toward one side of the planned cutting line 12A (i.e. toward the direction of L2) in this way, the tendency of a cutting line to be curved toward the edge 14A is corrected toward the opposite direction by a force caused by thermal stress, with the results that the glass plate can be cut along the planned cutting line 12A.
On the other hand, the center 101 A of the first irradiation region 100A having a smaller width moves on the planned cutting line 12A. Thus, it is possible to obtain high cutting accuracy as in the first embodiment. The center 101A may be slightly displaced toward one side of the planned cutting line 12A as long as the first irradiation region 100A moves, being matched with an actual cutting position.

In order to displace the center (center of gravity) 201A of the second irradiation region 200A having a greater width with respect to the planned cutting line 12A, there is provided, e.g. a shifting device which can shift the second light source 42 with respect to the first light source 41 such that the center (center of gravity) 201 A of the second irradiation region 200A having a greater width is shifted with respect to the center 101 A of the first irradiation region 100A having a smaller width. Or, there may be provided a shifting device which can rotate the second light source 42 about the first light source 41 to change the distance between the center (center of gravity) 201A of the second irradiation region 200A having a greater width and the planned cutting line 12A. The present invention is not limited to a mode having such shifting devices.

(Third embodiment)

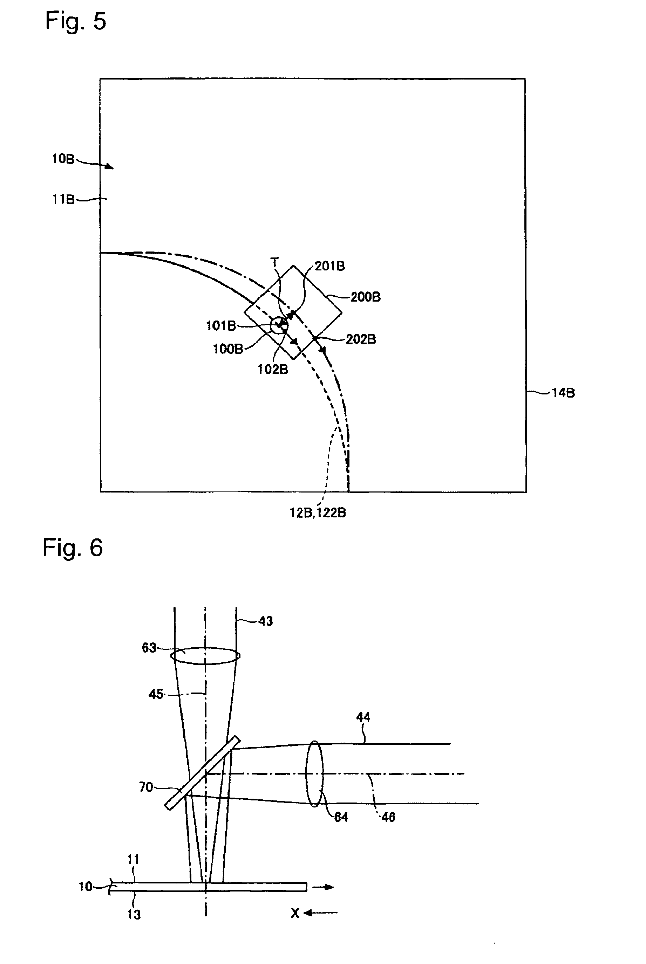

Fig. 5 is an explanatory view showing how to cut according to the third embodiment of the present invention. In Fig. 5, the center (center of gravity) 201 B has a track indicated by a dashed dotted line.

In this embodiment, a glass plate 10B has an asymmetrical shape with respect to a planned cutting line 12B. The planned cutting line 12B is formed only by a curved portion 122B, and the glass plate has different rigidities on both sides of the planned cutting line 12B. The curved portion 122B crosses an edge 14B of the glass plate 10B at its starting point and ending point.

In this case, a second irradiation region 200B having a greater width is preferred to be displaced toward one side with respect to the planned cutting line 12B on a front surface 11 B of the glass plate 10B. For example, the center 201 B of the second irradiation region 200B is preferred to be displaced toward one side of the planned cutting line 12B (outer side of the planned cutting line 12B in this figure).

The displacement position is determined based on the positional relationship between the edge 14B of the glass plate 10B and the planned cutting line 12B, or the size or form of the curved portion 122B of the planned cutting line 12B, such as the radius of curvature of the curved portion 122B. The center is displaced toward a portion of the glass plate on one side of the planned cutting line 12B, which has a greater rigidity, such as in an outer radial direction with respect to the curved portion 122B (i.e. a normal direction of the curved portion outside the arc of the curved portion).

The displacement amount T may be set in the same way as the second embodiment. In other words, the displacement amount may be determined based on the distance between the planned cutting line 12B and the edge 14B of the glass plate 10B in a normal direction of the planned cutting line 12B, i.e. the widths of the glass plate 10B on both sides of the planned cutting line 12B.

The displacement amount T may have a maximum value determined based on the radius of curvature of the curved portion 122B and determined so as to increase as the radius of curvature decreases. The reason is that the glass plate has different accumulated amounts of heat on a left side and a right side of the planned cutting line even when the glass plate has the same heated width in the inner and outer sides of the planned cutting line. When the radius of curvature is at least a threshold value, T may be set to 0 since the curved portion 122B has a small effect. The threshold value is determined based on, e.g. the accumulated amounts of heat on the right and left sides of the planned cutting line of the glass plate 10B.

For example, a first irradiation region 100B and the second irradiation region 200B are moved with their centers 101 B and 201 B being out of alignment with each other as shown in Fig. 5. During the movement, the center 101 B is moved on the planned cutting line 12B. On the other hand, the center 201 B is moved, being displaced with respect to the center 101 B in a normal direction of the planned cutting line 12B.

In more detail, the center 201 B is gradually displaced toward an outer radial direction with respect to the planned cutting line 12B (i.e. an outer direction of the arc of the curved portion 122B) from the starting point to a midway point of the curved portion 122B. And, the center 201 B is gradually displaced in inner radial direction with respect to the planned cutting line 12B from the midway point to the ending point of the curved portion 122B. The center 201 B lies on the planned cutting line 12B and is in alignment with the center 101 B at the starting point and the ending point of the curved portion 122B.

In a case where the glass plate has different rigidities on both sides of the planned cutting line 12B, when the second irradiation region 200B having a greater width is displaced toward one side with respect to the planned cutting line 12B (i.e. toward a portion of the glass plate having a greater rigidity with respect to the planned cutting line) in this manner, the tendency of the cutting line to be curved is corrected toward the opposite direction by a force caused by thermal stress, with the result that the glass plate can be cut along the planned cutting line 12B.

On the other hand, the center 101 B of the first irradiation region 100B having a smaller width moves on the planned cutting line 12B. Thus, it is possible to obtain high cutting accuracy as in the first embodiment. The center 101 B may be slightly displaced toward one side of the planned cutting line 12B as long as the first irradiation region 100B moves, being matched with an actual cutting position.

Although the planned cutting line 12B is formed only by the curved portion 122B in this embodiment, the present invention is not limited to such a mode. For example, the planned cutting line 12B may contain a linear portion in addition to the curved portion 122B.

(Fourth embodiment)

Fig. 6 is a side view of essential portions of a first heating light system and a second heating light system of the cutting system according to a fourth embodiment of the present invention. In Fig. 6, the same parts as those shown in Figs. 1 and 2 are indicated by the same symbols, and the explanation of these parts will be omitted.

The cutting system 20A according to this embodiment includes an optical system 70, by which first heating light 43 and second heating light 44 are caused to have optical axes 45 and 46 vertically crossing a front surface 11 of a glass plate 10.

The optical system 70 may be constituted by, e.g. a dichroic mirror which allows the first heating light 43 to pass therethrough and reflects the second heating light 44 having a different wavelength from the first heating light 43. This optical system 70 is disposed between a stage 30 and each of a first condenser lens 63 and a second condenser lens 64.

Although the dichroic mirror according to this embodiment allows the first heating light 43 to pass therethrough and reflects the second heating light 44, the dichroic mirror may reflect the first heating light 43 and allow the second heating light 44 to pass therethrough such that the first heating light 43 is interchanged with the second heating light 44 in Fig. 6.

The first heating light 43 and the second heating light 44 have their optical axes 45 and 46 vertically crossing the front surface 11 of the glass plate 10 in this way. Thus, it is easy to control a thermal stress distribution since the center of the first heating light 43 is in alignment with the center of the second heating light 44 on the front surface 11 and a rear surface 13 of the glass plate 10 as viewed from a thickness direction of the glass plate 10.

EXAMPLES

Although the present invention will be described more specifically based on examples or the like, the present invention is not limited to these examples.

(Example 1 to Example 2)

In Example 1, a glass plate was cut by the method shown in Fig. 3. The glass plate was a glass plate usable as a window glass for a vehicle, which had dimensions of 100 mm $\times$ 100 mm $\times$ 3.5 mm (longitudinal dimension $\times$ transverse dimension $\times$ thickness). The glass plate had an annealing point of about 550°C. The planned cutting line was linear in parallel with one side of the glass plate, and the glass plate had widths L1 and L2 (see Fig. 4) set to 20 mm and 80 mm on both sides of the planned cutting line, respectively. The planned cutting line had no cut formed therein at its starting point.

The first light source in this example was a FBL (wavelength: 1,070 nm), and the second light source of this example was a DDL (wavelength: 808 nm). The glass plate had an absorption coefficient $\alpha1$ of 2.7 with respect to first heating light and an absorption coefficient $\alpha2$ of 1.9 with respect to second heating light. The first irradiation region of the first heating light was formed in a circular shape having a spot diameter of 0.7 mm on a front surface of the glass plate, and the second irradiation region of the second heating light was formed in a circular shape having a spot diameter of 4 mm on the front surface of the glass plate. W1/W2 as the width ratio between the width (spot diameter) W1 of the first irradiation region and the width (spot diameter) W2 of the second irradiation region was 0.18. The centers of the first and second irradiation regions were moved on the planned cutting line at a speed of 10 mm/sec such that these spots form concentric circles while the second irradiation region precedes.

When an attempt was made to optimize the first and second amounts of heat Q1 and Q2 for the first heating light and the second heating light, it was possible to cut the glass plate under conditions where the first amount of heat Q1 was 14 W, the second amount of heat Q2 was 16 W, the total amount, Q1 +Q2, of heat was 30 W, and (Q1/Q2) is equal to 0.88. At that time, the first light source had an output of 25 W, the second light source had an output of 35 W, and the total output was 60 W. The actual cutting line was in conformity with the planned cutting line on the front surface of the glass plate.

In this regard, the first amount of heat Q1 was approximately calculated based on the output $P_0$ (unit: W) of the first light source, the absorption coefficient $\alpha1$ (unit: /cm) of the glass plate to the first heating light, the thickness H (unit: cm) of the glass plate and the reflectance R1 of the glass plate in accordance with the following formula:

$$(Q1=(1-R1)×P_0 ×(1-exp(-α1×H)))$$

This is also applicable to the second amount of heat Q2.

In Example 2, an attempt was made to cut a glass plate in the same manner as Example 1 except that the first heating light was not used. It was not possible to cut the glass plate under a condition where the second amount of heat was less than 49.5 W. Under a condition where the second amount of heat was 49.5 W, the maximum displacement width between the actual cutting line and the planned cutting line was 1.5 mm on the front surface of the glass plate. At that time, the second light source had an output of 110 W.

The conditions and the results of the above-mentioned tests are collectively listed in Table 2.

[Table 2]

| | First laser light | | | | Second laser light | | | | Total amount of heat Q1+Q2 (W) | Maximum displacement width of cutting line (mm) |
|---|---|---|---|---|---|---|---|---|---|---|
| | Light source output (W) | spout diameter (mm) | Irradiation width W1 (mm) | Amount of heat Q1 (W) | Light source output (W) | Spot diameter (mm) | Irradiation width W2 (mm) | Amount of heat Q2 (W) | | |
| Ex. 1 | 25 | 0.7 | 0.7 | 14 | 35 | 4 | 4 | 16 | 30 | 0 |
| Ex. 2 | - | | | | 110 | 4 | 4 | 49.5 | 49.5 | 1.5 |

As seen from Table 2, it is revealed that it is possible to improve heating efficiency and cutting accuracy by using two kinds of heating light having different spot diameters (widths) and moving the first irradiation region having a smaller width in tandem with the preceding second irradiation region having a greater width. In other words, it is revealed that it is possible to perform cutting operation at a smaller total amount of heat and at a smaller output when the cutting speed is the same as that in the conventional systems and that it is possible to improve cutting accuracy in case of cutting a portion of a glass plate in vicinity of an edge.

(Example 3 to Example 6)

In each of Example 3 to Example 6, a glass plate was subjected to a cutting test with the displacement amount T of the center of the second irradiation region on a front surface of the glass plate (see Fig. 4) being modified. Specifically, in each of Examples 3, 4 and 6, the track of the center of the second irradiation region was displaced in parallel with the planned cutting line. In Example 5, the track of the center (center of gravity) of the second irradiation region overlapped the planed cutting line.

The conditions and the results of the cutting test are collectively listed in Table 3. In Table 3, description about the same conditions as those of Example 1 will be omitted. In Table 3, in order to represent a displacement direction, the positive or negative sign is added to the displacement amount T for descriptive purposes such that the positive sign is added when displacement was made toward a greater width with respect to the planned cutting line while the negative sign is added when the displacement was made toward a smaller width. In other words, the positive sign is added to the displacement toward the L2 direction, and the negative sign is added to the displacement toward the L1 direction.

[Table 3]

| | Glass plate | | First laser light | Second laser light | | Maximum displacement width of cutting line (mm) |
|---|---|---|---|---|---|---|
| | Width L1 (mm) | Width L2 (mm) | Light source output (W) | Light source output (W) | Displacement amount T (mm) | |
| Ex. 3 | 5 | 95 | 30 | 40 | +1.5 | 0 |
| Ex. 4 | | | | 35 | +1 | 2.5 |
| Ex. 5 | | | | 25 | 0 | 3.8 |
| Ex. 6 | | | | 25 | -1 | Cutting was impossible |

As seen from Table 3, it is revealed that when cutting a glass plate along its one side (in other words, when cutting a glass plate close to and along a lateral side, not at its central portion), it is possible to improve cutting accuracy by displacing the center of the second irradiation region having a greater width toward one side of the planned cutting line (toward a direction away from the side of the glass plate, i.e. toward a central direction of the glass plate).

In Example 6, cracks were unintentionally formed since the track of the center of the second irradiation region having a greater width was too close to the one side of the glass plate, and it was impossible to cut the glass plate with good accuracy. Although no description was made in Table 3, it is impossible to cut a glass plate along a planned cutting line when performing heating operation only by the second heating light with no first heating light being used as in Example 2.

(Example 7 to Example 10)

In each of Example 7 to Example 10, a glass plate was subjected to a cutting test with the ratio of the amount of heat Q1/Q2 being modified by controlling a second amount of heat Q2.

The conditions and the results of the tests are collectively listed in Table 4. In Table 4, description about the same conditions as those of Example 1 will be omitted.

[Table 4]

| | First laser light | | Second laser light | | Ratio of amount of heat Q1/Q2 | Maximum displacement width of cutting line (mm) |
|---|---|---|---|---|---|---|
| | Light source output (W) | Amount of heat Q1 (W) | Light source output (W) | Amount of heat Q2 (W) | | |
| Ex. 7 | 25 | 14 | 35 | 15.8 | 0.89 | 0 |
| Ex. 8 | | | 45 | 20.3 | 0.69 | 0 |
| Ex. 9 | | | 50 | 22.5 | 0.62 | 0 |
| Ex. 10 | | | 80 | 36.0 | 0.39 | 1.2 |

As seen from Table 4, it is revealed that it is possible to cut a glass plate with good accuracy when the ratio of the amount of heat Q1/Q2 is at least 0.6.

(Example 11 to Example 12)

In each of Example 11 and Example 12, a glass plate was subjected to a cutting test by modifying the width W1 of the first irradiation region and optimizing the first and second amounts of heat Q1 and Q2 such that a portion of the glass plate in the first irradiation region had a lower temperature than the annealing point.

The conditions and the results of the tests are collectively listed in Table 5. In Table 5, description about the same conditions as those of Example 1 will be omitted.

[Table 5]

| | Glass plate | | First laser light | | | | Second laser light | | Ratio of amount of heat Q1/Q2 | Maximum displacement width of cutting line (mm) |
|---|---|---|---|---|---|---|---|---|---|---|
| | Width L1 (mm) | Width L2 (mm) | Light source output (W) | Spot diameter (mm) | Irradiation width W1 (mm) | Amount of heat Q1 (W) | Light source output (W) | Amount of heat Q2 (W) | | |
| Ex. 11 | 10 | 90 | 15 | 0.2 | 0.2 | 8.4 | 60 | 27 | 0.31 | 2.0 |
| Ex. 12 | | | 30 | 0.8 | 0.8 | 16.8 | 30 | 13.5 | 1.24 | 0 |

As seen from Table 5, it is revealed that it is possible to cut a glass plate with good accuracy when the first irradiation width W1 is set to at least 0.4 mm

The reason why the cutting accuracy was reduced in Example 11 is that it was difficult to provide the first irradiation region with a sufficient amount of heat required for serving as a cutting position and to bring a portion of the glass plate in the first irradiation region to a lower temperature than the annealing point of the glass since the width W1 of the first irradiation region was too small.

(Example 13 to Example 16)

In each of Example 13 to Example 16, a glass plate was subjected to a cutting test with the ratio (W1/U) of the first irradiation width W1 to the thickness U of the glass plate (3.5 mm in these Examples) being modified and the displacement amount T (see Fig. 4) of the center of the second irradiation region being modified.

The conditions and the results of the tests are collectively listed in Table 6. In Table 6, description about the same conditions as those of Example 1 will be omitted. In Table 6, in order to represent a displacement direction, the positive or negative sign is added to the displacement amount T for descriptive purposes such that the positive sign is added when displacement was made toward a greater width with respect to the planned cutting line while the negative sign is added when the displacement was made toward a smaller width.

The ratio (Q1/Q2) of the first amount of heat Q1 to the second amount of heat Q2 in Examples 13 and 14, and that in Examples 15 and 16 were 1.09 and 1.87, respectively.

[Table 6]

| | Glass plate | First laser light | | | Second laser light | | | W1/U | Maximum displacement width of cutting line (mm) |
|---|---|---|---|---|---|---|---|---|---|
| | Thickness U (mm) | Light source output (W) | Spot diameter (mm) | Irradiation width W1 (mm) | Light source output (W) | Spot diameter (mm) | Displacement amount T (mm) | | |
| Ex. 13 | 2 | 35 | 1 | 1 | 40 | 2×20 (rectangle) | +4 | 0.5 | 0 |
| Ex. 14 | | | | | | | +10 | | 0 |
| Ex. 15 | | 45 | 2 | 2 | 30 | | +4 | 1.0 | 0.2 |
| Ex. 16 | | | | | | | +10 | | 0 |

As seen from Table 6, it is revealed that it is possible to cut a glass plate with good accuracy when the first irradiation width W1 is equal to at most the thickness U of the glass plate. It is also revealed that when the first irradiation width W1 is equal to the thickness U of a glass plate, it is possible to improve cutting accuracy by setting the displacement amount T to a large value.

(Example 17 and Example 18)

In each of Example 17 and Example 18, a glass plate was subjected to a cutting test with the width ratio W1/W2 being changed by modifying the width W2 of the second irradiation region.

The conditions and results of the tests are collectively listed in Table 7. In Table 7, description about the same conditions as those of Example 1 will be omitted.

[Table 7]

| | Second laser light | | | Width ratio W1/W2 | Maximum displacement width of cutting line (mm) |
|---|---|---|---|---|---|
| | Light source output (W) | Spot diameter (mm) | Irradiation width W2 (mm) | | |
| Ex. 17 | 35 | 4 | 4 | 0.18 | 0 |
| Ex. 18 | 30 | 3 | 3 | 0.23 | 1.8 |

As seen from Table 7, it is revealed that it is possible to a glass plate with good accuracy when the width ratio W1/W2 is at most 0.2.

The ratio (Q1/Q2) of the first amount of heat Q1 to the second amount of heat Q2 in Example 17 and that in Example 18 were 1.04 and 0.89, respectively.

(Example 19 to Example 33)

In each of Example 19 to Example 33, it was checked out whether a glass plate was cut or not with the focus position of the first heating light being modified and with D1/D2 as the ratio of the power density of the first heating light being modified. The first heating light had a converging angle of 5.7°, and the focus position of the first heating light was located under the glass plate (on the opposite side of the light source).

The power density D1 (unit: $W/mm^2$) was approximately calculated based on the output $P_0$ (unit: W) of the first light source, reflectance R1 and the irradiation area S1 (unit: $mm^2$) of the first heating light on a front surface of the glass plate in accordance with the following formula:

$$D1=(1-R1)\times P_0 /S1$$

On the other hand, the power density D2 (unit: $W/mm^2$) was approximately calculated based on the output $P_0$ (unit: W) of the first light source, the absorption coefficient $\alpha1$ (unit: /cm) of the glass plate to the first heating light, the thickness H (unit: cm) of the glass plate and the irradiation area S2 (unit: $mm^2$) of the first heating light on a rear surface of the glass plate in accordance with the following formula:

$$D2=(1-R1)\times P_0 \times exp(-\alpha1\times H)/S2$$

The conditions and results of the tests are collectively listed in Table 8. In Table 8, description about the same conditions as those of Example 1 will be omitted. In Table 8, a symbol of "⦿" represents a case where cutting was made with good accuracy, a symbol of "○" represents a case where cutting was made at a different position from a planned position, and a symbol of "×" represents a case where cutting was not made.

The ratio (Q1/Q2) of the first amount of heat Q1 to the second amount of heat Q2 in Examples 19 to 23, that in Examples 24 to 28, and that in Examples 29 to 33 were 0.76, 0.94, 1.14, 1.33 and 1.52, respectively.

[Table 8]

| | First laser light | | | | | Second laser light | | Total amount of heat Q1+Q2(W) | Whether cutting was made or not |
|---|---|---|---|---|---|---|---|---|---|
| | Light source output (W) | Spot diameter (mm) | Irradiation width W1 (mm) | Amount of heat Q1 (W) | Power density ratio D1/D2 | Light source output (W) | Amount of heat Q2 (W) | | |
| Ex. 19 | 25 | 0.5 | 0.5 | 14 | 0.76 | 35 | 16 | 30 | .. |
| Ex. 20 | | 0.6 | 0.6 | | 0.94 | | | | .. |
| Ex. 21 | | 0.7 | 0.7 | | 1.14 | | | | .. |
| Ex. 22 | | 0.8 | 0.8 | | 1.33 | | | | .. |
| Ex. 23 | | 1 | 1 | | 1.52 | | | | .. |
| Ex. 24 | | 0.5 | 0.5 | | 0.76 | 40 | 18 | 32 | .. |
| Ex. 25 | | 0.6 | 0.6 | | 0.94 | | | | .. |
| Ex. 26 | | 0.7 | 0.7 | | 1.14 | | | | .. |
| Ex. 27 | | 0.8 | 0.8 | | 1.33 | | | | .. |
| Ex. 28 | | 1 | 1 | | 1.52 | | | | .. |
| Ex. 29 | 30 | 0.5 | 0.5 | 16.5 | 0.76 | 35 | 16 | 32.5 | .. |
| Ex. 30 | | 0.6 | 0.6 | | 0.94 | | | | .. |
| Ex. 31 | | 0.7 | 0.4 | | 1.14 | | | | .. |
| Ex. 32 | | 0.8 | 0.8 | | 1.33 | | | | .. |
| Ex. 33 | | 1 | 1 | | 0.52 | | | | .. |

As seen from Table 8, it is revealed that when the first heating light has a power density ratio, D1/D2, of 0.8 to 1.2, it is possible to cut a glass plate with good accuracy with the total amount of heat, Q1+Q2, being minimized when the cutting speed is the same as the conventional systems.

(Example 34 and Example 35)

In each of Example 34 and Example 35, a glass plate was subjected to a cutting test by modifying the displacement amount T of the center of the second irradiation region, wherein the planned cutting line was formed in a shape shown in Fig. 5. The planned cutting line is formed only by a curved portion. The curved portion was formed in a quarter arch shape having a radius of 50 mm. The starting point of the curved portion lies at a midway point of one side of a glass plate, and the ending point of the curved portion lies at a midway point of another side of the glass plate.
The conditions and the results of the tests are collectively listed in Table 9. In Table 9, description about the same conditions as those of Example 1 will be omitted. In Table 9, in order to represent the displacement direction, the positive or negative sign is added to the displacement amount T for descriptive purposes such that the positive sign is added when displacement was made toward an outer side of both sides of the planned cutting line in a radial direction while the negative sign is added when displacement was made toward an inner side of the planned cutting line in a radial direction.

The ratio (Q1/Q2) of the first amount of heat Q1 to the second amount of heat Q1 in Examples 34 and 35 was 1.5

[Table 9]

| | First laser light | | | Second laser light | | | Maximum displacement amount T (mm) | Maximum displacement width of cutting line (mm) |
|---|---|---|---|---|---|---|---|---|
| | Light source output (W) | Wavelength (nm) | Spot diameter (mm) | Light source output (W) | Wavelength (nm) | Spot shape (mm) | | |
| Ex. 34 | 45 | 1,070 | 1.8 | 30 | 1,070 (FBL) | 8×8 | +2 | 0 |
| Ex. 35 | | | | | | | 0 | 0.6 |

As seen from Table 9, it is revealed that when a planned cutting line contains a curved portion, it is possible to improve cutting accuracy by displacing the center of a second irradiation region having a greater width toward one side of the planned cutting line (in an outer radial direction) in the curved portion (except its starting and ending points).

(Example 36)

In Example 36, it was checked out whether a glass plate was cut or not when using an infrared heater (color temperature: 2,800K), instead of laser light, as the second light source. The glass plate was a glass plate usable as a window glass for a vehicle, which had dimensions of 100 mm × 100 mm × 2.0 mm (longitudinal dimension × transverse direction × thickness). The planned cutting line was linear in parallel with one side of the glass plate, and the glass plate had widths L1 and L2 (see Fig. 4) set to 10 mm and 90 mm on both sides of the planned cutting line, respectively. The planned cutting line had no cut formed therein at its starting point.

The first light source was a FBL (wavelength: 1,070 nm). The first irradiation region of the first heating light was formed in a circular shape having a spot diameter of 1.6 mm on a front surface of the glass plate and the second irradiation region of the second heating light was formed in a substantially circular shape having a spot diameter of 10 mm on the front surface of the glass plate. These spots were moved such that the centers of both spots were moved on the planned cutting line at a speed of 10 mm/sec while the center of the first heating light was preceding the center of the first heating light by a distance of 10 mm along the planned cutting line. The first line source had an output of 40W, the second light source had an output 25W, and the total output was 60W.

The test results show that it was possible to cut the glass plate. The actual cutting line was in conformity with the planned cutting line on the front surface of the glass plate.

(Example 37)

In Example 37, in a case where a glass plate to cut was made of strengthened glass, it was checked out whether the glass plate was cut or not. The glass plate was made of chemically strengthened glass and had dimensions of 50 mm × 50 mm × 1.1 mm (longitudinal dimension × transverse direction × thickness). The chemically strengthened glass contained 60.25% of $SiO_2$, 9.53% of $Al_2O_3$, 6.95% of MgO, 0.1 % of CaO, 0.1 % of SrO, 0.1% of BaO, 11.51% of $Na_2O$, 5.96% of $K_2O$, 4.76% of $ZrO_2$ and 0.74% of $Fe_2O_3$ as represented by mass percentage.

The chemically strengthened glass plate was prepared by immersing the above-mentioned chemically strengthened glass in a $KNO_3$ molten salt and subjecting the glass to ion-exchange treatment, followed by cooling the glass to a temperature close to room temperature. The measurements by a surface stress meter FSM-6000 (manufactured by Orihara Manufacturing Co., Ltd.) showed that the surface compressive stress (CS) was 670 MPa and that the compressive stress layer had a depth (DOL) of 31 $\mu$m.

The planned cutting line was linear in parallel with one side of the glass plate, and the glass plate had widths L1 and L2 (see Fig. 4) set to 10 mm and 40 mm on both sides of the planned cutting line, respectively. While the glass plate had an initial crack preliminarily formed on a lateral surface thereof at the starting point of the planned cutting line, the glass plate had no scrub line formed on a front surface thereof.

The first light source was a FBL (wavelength: 1,070 nm), and the second light source was an infrared heater (color temperature: 2,800K). The first irradiation region of the first heating light was formed in a circular shape having a spot diameter of 0.5 mm on the front surface of the glass plate, and the second irradiation region of the second heating light was formed in a substantially circular shape having a spot diameter of 10 mm on the front surface of the glass plate. These spots were moved at a speed of 10 mm/sec such that the center of the second heating light was preceding the center of the first heating light by a distance of 10 mm along the planned cutting line and was displaced toward a portion of the glass plate having a greater width in a direction orthogonal to the planned cutting line by a distance of 5 mm. The first light source had an output of 30 W. the second light source had an output of 75 W, and the total output was 105 W.

As a result, it was possible to cut the chemically strengthened glass plate. The actual cutting line was in conformity with the planned cutting line on the front surface of the glass plate.

INDUSTRIALAPPLICABILITY

In accordance with the present invention, it is possible to provide a cutting process and a cutting system, which are capable of not only increasing heating efficiency and cutting accuracy at the time of cutting a work piece but also easily coping with a change in the design of a planned cutting line. The present invention is particularly useful in cutting various kinds of glass plates.

The entire disclosure of Japanese Patent Application No. 2010-112553 filed on May 14, 2010 including specification, claims, drawings and summary is incorporated herein by reference in its entirety.

REFERENCE SYMBOLS

10    glass plate (work piece)
11    front surface
12    planned cutting line
13    rear surface
20    cutting device
41    first light source
42    second light source
43    first heating light
44    second heating light
50    controller

**Claims**

1. A process for cutting a work piece by irradiating first and second irradiation regions on a front surface of the work piece with first heating light and second heating light and relatively moving the first and second irradiation regions along a planned cutting line on the front surface;
   wherein a width of the first irradiation region extending in a direction orthogonal to the moving direction thereof is smaller than a width of the second irradiation region extending in a direction orthogonal to the moving direction thereof, and the first irradiation region is moved in tandem with the second irradiation region preceding the first irradiation region.

2. The process according to Claim 1, wherein the second irradiation region moves such that a center of gravity thereof is displaced toward a portion of the work piece on one of both sides of the planned cutting line, which has a greater rigidity.

3. The process according to Claim 1 or 2, wherein the planned cutting line is located in a portion of the work piece, which is away from a central region of the work piece and closer to a lateral side, and the second irradiation region moves such that a center of gravity thereof is displaced toward the central region of the work piece with respect to the planned cutting line.

4. The process according to any one of Claims 1 to 3, wherein the planned cutting line contains a curved portion, and the second irradiation region moves such that a center of gravity thereof is displaced toward a direction opposite to a radial direction with respect to the curved portion when the work piece is cut at the curved portion.

5. The process according to any one of Claims 1 to 4, wherein the first irradiation region is formed in a shape having a roundness of at most 0.5R, the first irradiation region having an outer circumference having a radius of R.

6. The process according to any one of Claims 1 to 5, wherein Q1/Q2 as a ratio of amount of heat between an amount of heat Q1 per unit time given to the work piece by the first heating light and an amount of heat Q2 per unit time given to the work piece by the second heating light is at least 0.6.

7. The process according to any one of Claims 1 to 6, wherein the width of the first irradiation region is at least 0.4 mm.

8. The process according to any one of Claims 1 to 7, wherein W1/W2 as a width ratio between the width W1 of the first irradiation region and the width W2 of the second irradiation region is at most 0.2.

9. The process according to any one of Claims 1 to 8, wherein the work piece has an absorption coefficient of at most 50/cm with respect to the first heating light.

10. The process according to any one of Claims 1 to 9, wherein the work piece has an absorption coefficient of at least 0.2/cm with respect to the first heating light.

11. The process according to any one of Claims 1 to 10, wherein the first heating light is condensed such that D1/D2 as a ratio of power density between a power density D1 of the first heating light on the front surface of the work piece and a power density D2 of the first heating light on a rear surface of the work piece is 0.8 to 1.2.

12. The process according to any one of Claims 1 to 11, wherein the work piece comprises a glass plate.

13. The process according to any one of Claims 1 to 12, wherein the first heating light and the second heating light are infrared light.

14. A system for cutting a work piece, comprising a stage for supporting a work piece; sources for first heating light and second heating light, with which a front surface of the work piece is irradiated; and a controller, the controller controlling respective first and second irradiation positions of the first and second heating light on the front surface, and the controller moving the first and second irradiation regions along a planned cutting line on the front surface relatively with respect to the work piece such that the work piece is cut;
wherein the cutting system further comprises an irradiation device and the controller for the first and second irradiation regions, the irradiation device irradiating the first heating light and the second heating light such that a width of the first irradiation region extending in a direction orthogonal to the moving direction of the first irradiation region is smaller than a width of the second irradiation region extending in a direction orthogonal to the moving direction of the second irradiation region, and the controller for the first and second irradiation regions moving the first irradiation region in tandem with the second irradiation region preceding the first irradiation region.

15. The system according to Claim 14, wherein the first heating light and the second heating light are infrared light.

## Fig. 1

## Fig. 2

Fig. 3

Fig. 4

Fig. 5

Fig. 6

## INTERNATIONAL SEARCH REPORT

| International application No. |
|---|
| PCT/JP2011/061075 |

**A. CLASSIFICATION OF SUBJECT MATTER**
*B23K26/38*(2006.01)i, *B23K26/00*(2006.01)i, *B23K26/06*(2006.01)i, *B23K26/40* (2006.01)i, *B23K26/42*(2006.01)i, *B28D5/00*(2006.01)i, *C03B33/09*(2006.01)i

According to International Patent Classification (IPC) or to both national classification and IPC

**B. FIELDS SEARCHED**

Minimum documentation searched (classification system followed by classification symbols)
B23K26/38, B23K26/00, B23K26/06, B23K26/40, B23K26/42, B28D5/00, C03B33/09

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 10-34364 A  (Soei Tsusho Kabushiki Kaisha),<br>10 February 1998 (10.02.1998),<br>entire text; all drawings<br>(Family: none) | 1,14<br>2-13,15 |
| X | Microfilm of the specification and drawings annexed to the request of Japanese Utility Model Application No. 069428/1978(Laid-open No. 171639/1979)<br>(NEC Corp.),<br>04 December 1979 (04.12.1979),<br>entire text; all drawings<br>(Family: none) | 1,5,8,14 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>09 August, 2011 (09.08.11) | Date of mailing of the international search report<br>23 August, 2011 (23.08.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/061075

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | JP 11-10375 A  (Soei Tsusho Kabushiki Kaisha),<br>19 January 1999 (19.01.1999),<br>entire text; all drawings<br>(Family: none) | 2-13,15 |
| Y | JP 2000-281373 A  (Mitsubishi Electric Corp.),<br>10 October 2000 (10.10.2000),<br>entire text; all drawings<br>(Family: none) | 2-13,15 |
| A | JP 7-328781 A  (Soei Tsusho Kabushiki Kaisha),<br>19 December 1995 (19.12.1995),<br>entire text; all drawings<br>(Family: none) | 1-15 |
| A | JP 2006-263819 A  (Jenoptik<br>Automatisierungstechnik GmbH),<br>05 October 2006 (05.10.2006),<br>entire text; all drawings<br>& US 2006/0213883 A1    & DE 102005013783 A<br>& KR 10-2006-0102514 A | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009084133 A

- JP 2010112553 A